# EUROPÄISCHE PATENTANMELDUNG

(11) **EP 1 493 546 A1**
(43) Veröffentlichungstag der Anmeldung: **05.01.2005**
(21) Anmeldenummer: 04006572.4
(22) Anmeldetag: 18.03.2004
(51) Int. Cl.: B29C 49/42, B29C 49/78, B29C 49/04

(54) **Verfahren und Vorrichtung zum Herstellen von Kunststoffhohlkörpern mit Saugluftunterstützung**

(30) Priorität: 03.07.2003 DE 10330082
(71) Anmelder: MBK Maschinenbau Koetke GmbH, 29394 Reinstorf (DE)
(72) Erfinder: Koetke, Claus-Dieter, 29389 Bad Bodenteich (DE)
(74) Vertreter: Prietsch, Reiner, Dipl.-Ing.

(57) **Zusammenfassung**

Ein Verfahren und eine Vorrichtung zum Herstellen von Kunststoffhohlkörpern in einer Blasform (5), deren Formhohlraum (5.1) mit einem Sauggebläse (7) verbunden ist, zeichnen sich dadurch aus, dass der Sauganschluss des Sauggebläses (7) während der Zeit, in der zumindest das von der Einführöffnung abgewandte Ende des Formhohlraums (5.1) druckdicht verschlossen ist, mit einer Nebenluftöffnung (5.7) kommuniziert, und dass bei nicht benötigter Saugleistung das Sauggebläse (7) mit geringem Leistungsbedarf im Leerlauf arbeitet, jedoch bei Beginn des Einführens des Vorformlings (4) in die Blasform (5), die Saugleistung auf einen gegebenen Sollwert erhöht wird, wobei die Geschwindigkeit des Saugluftstroms durch den Formhohlraum durch Verändern des freien Querschnittes des Auslasses auf der Druckseite des Sauggebläses eingestellt wird.

## Beschreibung

Die Erfindung betrifft ein Verfahren und eine Vorrichtung zum Herstellen von Kunststoffhohlkörpern durch Einführen eines schlauchartigen Vorformlings aus thermoplastischem Kunststoff in eine Blasform, deren Formhohlraum an seinem von der Einführöffnung abgewandten Ende mit dem Sauganschluss eines Sauggebläses verbunden ist, welches einen Saugluftstrom veränderbarer Geschwindigkeit erzeugt.

Bei einem derartigen Verfahren dauert das Einführen des Vorformlings in den Formhohlraum weniger als 2 Sekunden, entsprechend höchstens 3 bis 5 % der Dauer eines vollständigen Zyklus, der u.a. das Ausblasen des Vorformlings zum fertigen Artikel in der Blasform, die Abkühl- und die Entformzeit sowie die entsprechenden Werkzeugbewegungen umfasst. Deshalb war es bisher üblich, den Saugluftstrom durch Ein- und Ausschalten des Sauggebläses bzw. dessen Antriebsmotors nur während der tatsächlich benötigten Zeit zu erzeugen und nötigenfalls während des Einführens oder Einsaugens des Vorformlings in die Werkzeugkavität zu variieren. In beiden Fällen steht die Massenträgheit der beweglichen Teile des Sauggebläses der verzögerungsfreien Erzeugung, Geschwindigkeitsänderung und Beendigung des Saugluftstromes entgegen.

Zur schnellen und genauen Anpassung eines Ansaugvolumenstroms an die Einführgeschwindigkeit des Vorformlings ist aus der DE-C-199 60 592 ein Verfahren der einleitend angegebenen Gattung bekannt, bei dem im Saugkanal ein gesteuertes Servoventil vorgesehen ist, das den freien Strömungsquerschnitt des Saugkanals variiert. Der Vorformling soll nach diesem Verfahren gerade Wegabschnitte in der Blasform rascher als gekrümmte Wegabschnitte passieren. Deshalb wird im ersteren Fall ein höheres Saugluftvolumen pro Zeiteinheit erzeugt als im letzteren Fall. Allerdings erwärmt sich das Sauggebläse je nach dem Ausmaß der saugseitigen Drosselung rasch und beträchtlich, insbesondere wenn es, wie vorgesehen zu sein scheint, während der gesamten Zykluszeit läuft. Ein weiterer Nachteil besteht darin, dass die von dem Saugluftstrom auf den Vorformling ausgeübte Zugkraft mit dem Öffnen des saugseitigen Servoventils schlagartig wirksam wird. Dadurch kann es zur Bildung von Marken auf dem Vorformling kommen, die auch an dem Fertigartikel sichtbar bleiben. Ein weiterer Nachteil der saugseitigen Drosselung besteht trotz eines druckseitig vorgesehenen Schalldämpfers in einer nicht unerheblichen Geräuschentwicklung. Diese Nachteile gelten auch für eine in der DE-C-199 60 592 angedeutete Variante mit saugseitigem druckbegrenztem Bypass, deren Einzelheiten nicht erläutert sind.

Der Erfindung liegt die Aufgabe zugrunde, ein Verfahren und eine Vorrichtung der einleitend angegeben Gattung zur Verfügung zu stellen, die energiesparend und ohne zu starke Erwärmung des Druckgebläses eine rasche und präzise Einstellung und Änderung der Saugluftgeschwindigkeit und damit der auf den Vorformling wirkenden Saug- bzw. Zugkraft erlauben.

Eine erste Lösung dieser Aufgabe besteht darin, dass der Sauganschluss des Sauggebläses während der Zeit, in der zumindest das von der Einführöffnung abgewandte Ende des Formhohlraums druckdicht verschlossen ist, mit einer Nebenluftöffnung kommuniziert, dass vor dem Beginn des Einführens des Vorformlings in die Blasform die Saugleistung des Sauggebläses von einem Leerlaufwert auf einen Sollwert erhöht wird und dass die jeweils erforderliche Geschwindigkeit des Saugstroms durch den Formhohlraum durch Verändern des freien Querschnitts des Auslasses auf der Druckseite des Sauggebläses eingestellt wird.

Bei diesem Verfahren wird also das Sauggebläse während der Zeit innerhalb eines Maschinenzyklus, in der kein Saugluftstrom durch den Formhohlraum benötigt wird, nicht vollständig abgeschaltet. Dadurch wird einerseits bei geringem Leistungsbedarf eine ausreichende Kühlung des Sauggebläses sichergestellt, andererseits die Zeit zum Hochfahren des Sauggebläses auf den Soll- oder Nennwert der Saugleistung beträchtlich verkürzt. Die Leerlaufsaugleistung des Sauggebläses und dementsprechend in etwa auch der Volumendurchsatz oder Volumenstrom des Saugstroms können bei etwa 10 % der entsprechenden Soll- oder Nennwerte liegen. Bei Beginn des Einführens des Vorformlings in die Blasform hat das Sauggebläse seine volle Saugleistung erreicht. Bei voller Saugleistung hat der Saugstrom seine größte Geschwindigkeit und übt damit auch die größte Zugkraft auf den Vorformling aus. Anders als in der DE-C-199 60 592 angegeben, wird diese volle Saugleistung jedoch nur benötigt, soweit der Vorformling stark gekrümmte Abschnitte des Formhohlraums passieren muss. Geringere Geschwindigkeiten des Saugstromes lassen sich nahezu trägheitslos durch das Verändern des freien Querschnittes des Auslasses auf der Druckseite des Sauggebläses über die entsprechend programmierte Maschinensteuerung einstellen.

Eine weitere verfahrensmäßige Lösung der genannten Aufgabe besteht darin, dass vor dem Beginn des Einführens des Vorformlings in die Blasform die Saugleistung des Sauggebläses von einem Leerlaufwert auf einen Sollwert erhöht wird und die jeweils erforderliche Geschwindigkeit des Saugstromes durch Zurückspeisen eines einstellbaren Teils des Druckluftstromes des Sauggebläses von dessen Druckseite auf die Saugseite eingestellt wird.

Gegenüber der erstgenannten Lösung hat diese alternative Lösung den zusätzlichen Vorteil, dass auf der Strecke zwischen der Blasform und dem Sauggebläse keine Nebenluftöffnung, die taktrichtig freigegeben und verschlossen werden muss, benötigt wird.

Eine vorteilhafte Weiterbildung der zweiten Lösung besteht darin, dass der freie Querschnitt des Auslasses auf der Druckseite des Sauggebläses und der auf die Saugseite des Sauggebläses zurückgespeiste Teil des Druckluftstroms differenziell verändert werden.

Bevorzugt wird die Geschwindigkeit des Saugluftstromes in der Saugleitung, alternativ der Unterdruck in der Saugleitung gemessen, der gemessene Wert als IST-Wert mit einem SOLL-Wert verglichen, und die Abweichung als Regelgröße zur Veränderung der Geschwindigkeit des Saugluftstroms verarbeitet.

Eine Vorrichtung insbesondere zur Durchführung des Verfahrens gemäß der ersten Lösung zeichnet sich dadurch aus, dass auf der Saugseite des Gebläses eine freigebbare und verschließbare Nebenluftöffnung vorgesehen ist und dass auf der Auslassseite des Sauggebläses ein servogesteuertes Ventil zur Veränderung des freien Querschnitts des Auslasses in Abhängigkeit von einem von der Maschinensteuerung erzeugten Signal, das repräsentativ für die Einführung des Vorformlings in den Formhohlraum ist, angeordnet ist.

Zweckmäßig besteht die Nebenluftöffnung aus mindestens einem Kanal, der an mindestens einem der am saugseitigen Ende der Blasform angeordneten Schieber derart mündet, dass der Schieber nur in seiner vorgeschobenen, die Blasform abdichtenden Stellung den Kanal mit der Sauganschlussöffnung der Blasform verbindet.

Eine Vorrichtung insbesondere zur Durchführung des Verfahrens gemäß der zweiten Lösung zeichnet sich dadurch aus, dass die Druckseite des Sauggebläses mit dessen Saugseite über einen Bypass und ein servogesteuertes Ventil zur Veränderung des freien Querschnitts des Bypasses verbunden ist.

Letzteres lässt sich insbesondere in der Form verwirklichen, dass auf der Druckseite des Sauggebläses ein Differenzialventil angeordnet ist, dessen Einlass mit dem Druckauslass des Sauggebläses, dessen erster Auslass mit der Umgebung und dessen zweiter Auslass mit dem Bypass kommunizieren.

Eine weitere Verbesserung besteht darin, dass in der Saugleitung stromauf von der Einmündung des Bypasskanals ein die Geschwindigkeit des Saugluftstroms oder den Unterdruck der Saugleitung messender Sensor angeordnet ist, dessen Anschlüsse mit der Maschinensteuerung verbunden sind.

In der Zeichnung sind Vorrichtungen nach den vorliegenden Vorschlägen beispielhaft und schematisch vereinfacht dargestellt. Es zeigt:
- Fig. 1: den hier interessierenden Teil einer Maschine zur Herstellung von Kunststoffhohlkörpern unter Einsatz des ersten Verfahrens nach der Erfindung, und
- Fig. 2: das Sauggebläse und die weiteren an der Einstellung der Saugluftgeschwindigkeit beteiligten Teile einer Maschine, die gemäß dem zweiten Verfahren nach der Erfindung arbeitet.

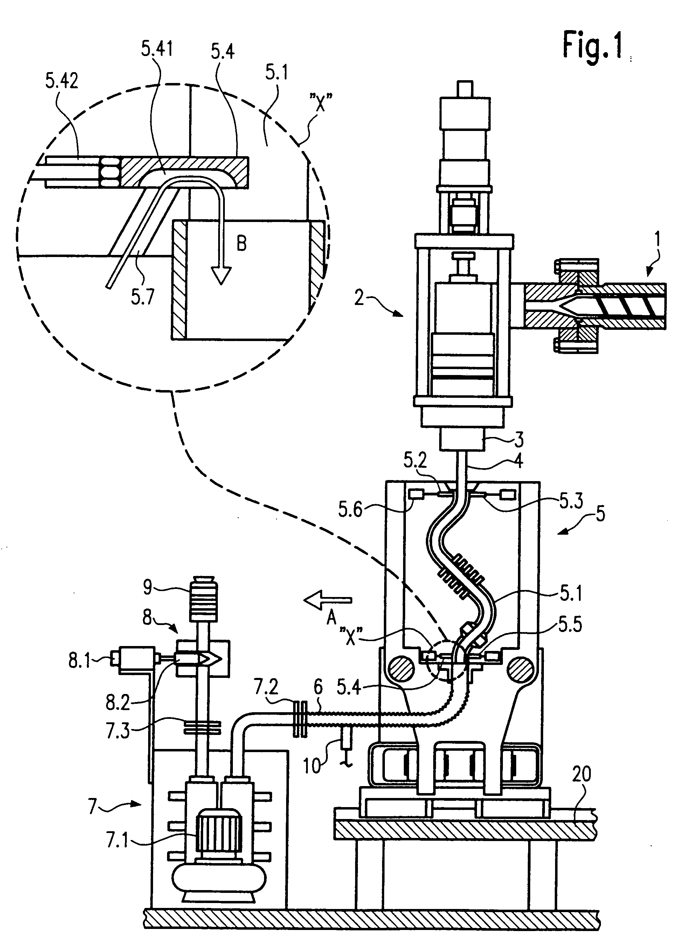

**Fig. 1** zeigt einen schematisch im Längsschnitt dargestellten Teil eines Extruders 1, der einem Düsenkopf 2, in der Regel einen sog. Staukopf, plastifizierten Kunststoff, z.B. PA (Polyamid), PP (Polypropylen) oder ABS (Acrylnitril-Butadien-Styrol-Copolymere) zuführt. In der Praxis sind an einen derartigen Düsenkopf häufig auch mehrere, unterschiedliche Kunststoffe liefernde Extruder angeschlossen, wenn coextrudierte Kunststoffhohlkörper hergestellt werden sollen. Der Düsenkopf 2 extrudiert über eine gewöhnlich mit einer Spaltverstellung ausgestattete Düse 3 einen schlauchartigen Vorformling 4 in die (obere) Einführöffnung einer geteilten Blasform 5. In der Zeichnung ist eine der beiden Formhälften weggelassen, so dass die dem herzustellenden Kunststoffhohlkörper entsprechende Kontur des Formhohlraums 5.1 deutlich wird, dessen Längsachse in diesem Beispiel u.a. zwei 90°-Bögen beschreibt. Die Blasform 5 ist auf einer Horizontalführung 20 in Richtung des Pfeiles A zu einer nicht dargestellten Blasstation verfahrbar, in welcher der Vorformling 4 durch Einblasen von Druckluft in an sich bekannter Weise zu dem fertigen Kunststoffhohlkörper umgeformt wird.

Um das Einführen des Vorformlings 4 in den Formhohlraum 5.1 zu unterstützen, ist der Formhohlraum 5.1 an seinem der Einführöffnung abgewandten, unteren Ende über einen flexiblen Schlauch 6 mit einer dem Verfahrweg der Blasform 5 entsprechend bemessenen Länge mit dem Sauganschluss 7.2 eines Sauggebläses 7 verbunden, das z.B. einen mittels eines drehzahlregelbaren Elektromotors 7.1 angetriebenen Seitenkanalverdichter umfassen kann. Auf der Auslassseite, anschließend an den Druckanschluss 7.3 des Sauggebläses 7, ist ein Ventil 8 angeordnet, auf das ein Schalldämpfer 9 folgt. Das Ventil 8 umfasst einen Stellmotor 8.1, z.B. einen Hydraulikzylinder, für ein bewegliches Ventilorgan, hier in Form eines Kegelschiebers 8.2, der schematisch in der Offenstellung gezeichnet ist. Ebenso wie der Elektromotor 7.1 und alle übrigen beweglichen Teile der Vorrichtung ist auch der Stellmotor 8.1 mit einer nicht dargestellten Maschinensteuerung verbunden, welche über den Stellmotor 8.1 das Ventilorgan 8.2 proportional verstellt, um die Geschwindigkeit des Saugluftstroms durch den Formhohlraum 5.1 taktrichtig entsprechend dem jeweiligen, programmierten Bedarf zu steuern.

Innerhalb eines vollständigen Maschinenzyklus nimmt das Einführen des Vorformlings 4 in dem Formhohlraum 5.1 bis zu dessen der Einführöffnung abgewandtem Ende gewöhnlich weniger als etwa zwei Sekunden, d.h. wenige Prozente eines Maschinenzyklus, in Anspruch. Während der übrigen Zykluszeit hält die Maschinensteuerung das Sauggebläse 7 auf einem energiesparenden Leerlaufwert. Zumindest während des größten Teils dieser Zeit ist der Formhohlraum 5.1 an seinem oberen Ende durch die angedeuteten oberen Schieber 5.2 und 5.3 sowie an seinem unteren Ende durch die unteren Schieber 5.4 und 5.5 verschlossen. Die Schieber werden von der Maschinensteuerung über angedeutete Zylinder wie 5.6 betätigt. In der geschlossenen Stellung gibt mindestens einer der unteren Schieber 5.4 bzw. 5.5 entsprechend der vergrößert herausgezeichneten Einzelheit "X" eine Nebenluftöffnung frei. Hierzu ist die Blasform 5.1 an ihrem unteren Ende mit einem Kanal 5.7 versehen, der außerhalb des Formhohlraumes 5.1 an der unteren Fläche des Schiebers 5.4 mündet, welcher seinerseits eine Ausnehmung 5.41 hat, die in der vorgeschobenen Schließstellung des Schiebers 5.4 den Kanal 5.7 mit dem Anschluss des Schlauches 6 verbindet, in der zurückgezogenen Offenstellung hingegen den Kanal 5.7 zu dem Formhohlraum 5.1 hin verschließt. Ohne diese Nebenluftöffnung würde das Sauggebläse 7 auch im Leerlauf in dem Schlauch 6 einen Unterdruck erzeugen, was zu einer erhöhten Leistungsaufnahme des Elektromotors 7.1 führen würde.

Kurz vor dem Beginn des Einführens des Vorformlings 4 in den Formhohlraum 5.1 und bei geöffneten Schiebern 5.2 bis 5.5 erhöht die Maschinensteuerung die Saugleistung des Sauggebläses 7 von einem Leerlaufwert auf einen vorgegebenen Sollwert. Während des Einführens des Vorformlings 4, d.h. während dessen vorderes Ende, unterstützt von der durch den Saugluftstrom erzeugten Zugkraft, den Formhohlraum 5.1 durchläuft, verändert dann die Maschinensteuerung entsprechend dem Fortschritt des vorderen Endes des Vorformlings 4 durch Verstellung des Ventilorgans 8.2 mittels des Stellmotors 8.1 die Geschwindigkeit des Saugstromes durch Verändern des freien Querschnitts des Auslasses auf der Druckseite des Sauggebläses 7, uzw. vorzugsweise so, dass der stärkste Saugstrom und dementsprechend die größte Zugkraft auf den Vorformling 4 dann ausgeübt wird, wenn dieser die stark gekrümmten Abschnitte des Formhohlraumes 5.1 passiert. Die dazu jeweils erforderliche Stellung des Ventilschiebers 8.2 wird in Abhängigkeit von dem Verlauf der Längsachse des Formhohlraums 5.1 am besten empirisch beim Einfahren der Maschine ermittelt und dann in das Programm der Maschinensteuerung geschrieben. Statt den Saugstrom in dieser Weise lediglich zu steuern, kann dessen Geschwindigkeit auch geregelt werden, uzw. mittels eines entweder die Geschwindigkeit oder/und den Durchsatz des Saugstromes, d.h. den jeweiligen IST-Wert ermittelnden Sensors 10, der an einer geeigneten Stelle des Schlauches 6 (oder auch in unmittelbarer Nähe des Sauganschlusses des Sauggebläses 7) angeordnet ist.

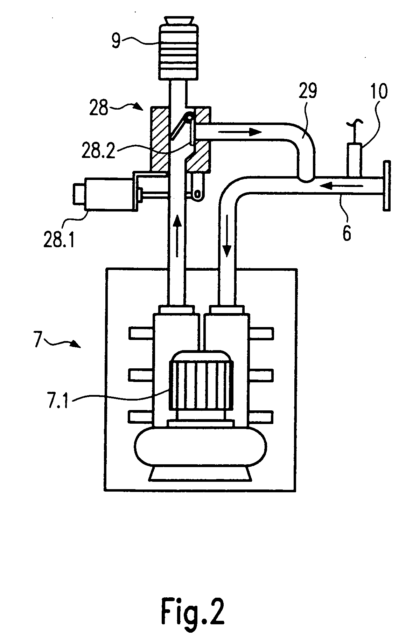

**Fig. 2** zeigt das Sauggebläse 7 und die weiteren, an der Einstellung der Saugluftgeschwindigkeit beteiligten Teile einer nach dem gleichen Prinzip arbeitenden Maschine, deren Blasform jedoch im Gegensatz zu Fig. 1 keinen Nebenluftkanal 5.7 und dementsprechend auch keine Ausnehmung 5.41 in dem Schieber 5.4 hat. Bei der Ausführungsform nach Fig. 2 folgt auf den Druckanschluss des Sauggebläses 7 ein Differenzialventil 28, das zusätzlich zu der zu dem Schalldämpfer 9 führenden Auslassöffnung eine weitere Auslassöffnung hat, welche über eine Bypassleitung 29 mit der Einlassseite des Sauggebläses 7 verbunden ist. Das über einen dem Stellantrieb 8.1 in Fig. 1 entsprechenden Stellantrieb 28.1 und einen Hebel betätigte Ventilorgan 28.2 ist als Klappe ausgebildet, die in der in gestrichelten Linien gezeichneten Stellung die zweite Auslassöffnung und damit die Bypassleitung 29 verschließt, hingegen in der in ausgezogenen Linien gezeichneten Stellung die erste Auslassöffnung vollständig verschließt und die zweite Auslassöffnung vollständig freigibt. Die letztere Stellung nimmt das Ventilorgan 28.2 ein, solange sich das Sauggebläse im Leerlaufbetrieb befindet. In der anderen Stellung des Ventilorgans 28.2 erzeugt das Sauggebläse 7 den maximalen Saugstrom, bzw. dessen vorgegebenen Sollwert. Zur Verminderung der Saugstromgeschwindigkeit und damit der auf den Vorformling 4 wirkenden Zugkraft während des Einführens in den Formhohlraum 5.1 bringt die Maschinensteuerung das Ventilorgan 28.2 über den Stellantrieb 28.1 in die entsprechende Zwischenstellung.

## Patentansprüche

1. Verfahren zum Herstellen von Kunststoffhohlkörpern durch Einführen eines schlauchartigen Vorformlings aus thermoplastischem Kunststoff in eine Blasform, deren Formhohlraum an seinem von der Einführöffnung abgewandten Ende mit dem Sauganschluss eines Sauggebläses verbunden ist, welches einen Saugluftstrom veränderbarer Geschwindigkeit erzeugt, **dadurch gekennzeichnet, dass** der Sauganschluss des Sauggebläses während der Zeit, in der zumindest das von der Einführöffnung abgewandte Ende des Formhohlraums druckdicht verschlossen ist, mit einer Nebenluftöffnung kommuniziert, dass vor dem Beginn des Einführens des Vorformlings in die Blasform die Saugleistung des Sauggebläses von einem Leerlaufwert auf einen Sollwert erhöht wird und dass die jeweils erforderliche Geschwindigkeit des Saugstroms durch den Formhohlraum durch Verändern des freien Querschnitts des Auslasses auf der Druckseite des Sauggebläses eingestellt wird.

2. Verfahren zum Herstellen von Kunststoffhohlkörpern durch Einführen eines schlauchartigen Vorformlings aus thermoplastischem Kunststoff in eine Blasform, deren Formhohlraum an seinem von der Einführöffnung abgewandten Ende mit dem Sauganschluss eines Sauggebläses verbunden ist, welches einen Saugluftstrom veränderbarer Geschwindigkeit erzeugt, **dadurch gekennzeichnet, dass** vor dem Beginn des Einführens des Vorformlings in die Blasform die Saugleistung des Sauggebläses von einem Leerlaufwert auf einen Sollwert erhöht wird und die jeweils erforderliche Geschwindigkeit des Saugstromes durch Zurückspeisen eines einstellbaren Teils des Druckluftstromes des Sauggebläses von dessen Druckseite auf die Saugseite eingestellt wird.

3. Verfahren nach den Ansprüchen 1 oder 2, **dadurch gekennzeichnet, dass** der freie Querschnitt des Auslasses auf der Druckseite des Sauggebläses und der auf die Saugseite des Sauggebläses zurückgespeiste Teil des Druckluftstroms differenziell verändert werden.

4. Verfahren nach einem der Ansprüche 1 bis 3, **dadurch gekennzeichnet, dass** die Geschwindigkeit des Saugluftstroms in der Saugleitung, alternativ der Unterdruck in der Saugleitung, gemessen, der gemessene Wert als Istwert mit einem Sollwert verglichen, und die Abweichung als Regelgröße zur Veränderung der Geschwindigkeit des Saugluftstroms verarbeitet wird.

5. Vorrichtung zum Herstellen von Kunststoffhohlkörpern durch Einführen eines schlauchartigen Vorformlings (4) aus thermoplastischem Kunststoff in eine Blasform (5), deren Formhohlraum (5.1) an seinem von der Einführöffnung abgewandten Ende mit dem Sauganschluss (7.2) eines Sauggebläses (7) verbunden ist, welches einen Saugluftstrom veränderbarer Geschwindigkeit erzeugt, insbesondere zur Durchführung des Verfahrens nach einem der Anprüche 1, 3 oder 4, **dadurch gekennzeichnet, dass** auf der Saugseite des Gebläses (7) eine freigebbare und verschließbare Nebenluftöffnung (5.7) vorgesehen ist und dass auf der Auslassseite des Sauggebläses (7) ein servogesteuertes Ventil (8) zur Veränderung des freien Querschnitts des Auslasses in Abhängigkeit von einem von der Maschinensteuerung erzeugten Signal, das repräsentativ für die Einführgeschwindigkeit des Vorformlings (4) in den Formhohlraum (5.1) ist, angeordnet ist.

6. Vorrichtung nach Anspruch 5, **dadurch gekennzeichnet, dass** die Nebenluftöffnung aus mindestens einem Kanal (5.7) besteht, der an mindestens einem der am saugseitigen Ende der Blasform (5) angeordneten Schieber (5.4) derart mündet, dass der Schieber nur in seiner vorgeschobenen, die Blasform (5) abdichtenden Stellung den Kanal (5.7) mit der Sauganschlussöffnung der Blasform (5) verbindet.

7. Vorrichtung zum Herstellen von Kunststoffhohlkörpern durch Einführen eines schlauchartigen Vorformlings (4) aus thermoplastischem Kunststoff in eine Blasform (5), deren Formhohlraum (5.1) an seinem von der Einführöffnung abgewandten Ende mit dem Sauganschluss (7.2) eines Sauggebläses (7) verbunden ist, welches einen Saugluftstrom veränderbarer Geschwindigkeit erzeugt, insbesondere zur Durchführung des Verfahrens nach einem der Anprüche 2 bis 4, **dadurch gekennzeichnet, dass** die Druckseite (7.3) des Sauggebläses (7) mit dessen Saugseite (7.2) über einen Bypass (29) und ein servogesteuertes Ventil (28) zur Veränderung des freien Querschnitts des Bypasses verbunden ist.

8. Vorrichtung nach Anspruch 7, **dadurch gekennzeichnet, dass** das Ventil ein Differenzialventil (28, 28.2) ist, dessen Einlass mit dem Druckauslass des Sauggebläses (7), dessen erster Auslass mit der Umgebung und dessen zweiter Auslass mit dem Bypass (29) kommunizieren.

9. Vorrichtung nach einem der Ansprüche 5 bis 8, **dadurch gekennzeichnet, dass** in der Saugleitung (6) ein die Geschwindigkeit des Saugluftstroms oder den Unterdruck der Saugleitung (6) messender Sensor (10) angeordnet ist, dessen Anschlüsse mit der Maschinensteuerung verbunden sind.
